# EUROPEAN PATENT SPECIFICATION

(11) **EP 1 229 049 B1**
(45) Date of publication and mention of the grant of the patent: **20.07.2005**
(21) Application number: 02009249.0
(22) Date of filing: 20.03.1997
(51) Int. Cl.: C08B 31/12, C08B 35/04, C08L 3/08, C08L 3/18, A23L 1/0522

(54) **Waxy potato starch stabilised via hydroxypropylation**
Durch Hydroxypropylierung stabilisierte Wachskartoffelstärke
Amidon de pomme de terre cireux stabilisé par hydroxypropylation

(30) Priority: 22.03.1996 US 13937 P
(43) Date of publication of application: 07.08.2002
(62) Divisional of application: 97104803.8
(73) Proprietor: National Starch and Chemical Investment Holding Corporation, New Castle, Delaware 19720 (US)
(72) Inventor: Jeffcoat, Roger, Bridgewater, New Jersey 08807 (US); Mason, William R., White Salmon, WA 986172 (US); Emling, Joseph L., Fishers, IN 46038 (US); Chiu, Chung-Wai, Westfield, New Jersey 07090 (US)
(74) Representative: Held, Stephan, Dr.rer.nat., Dipl.-Chem.

(56) References cited:
- WO-A-92/11376
- FR-A- 2 285 401
- US-A- 3 278 522
- US-A- 3 751 410
- US-A- 3 966 990
- DATABASE WPI Week 199717 Derwent Publications Ltd., London, GB; AN 1997-191487 XP002214951 "Substitute for gum arabic in confectionery prodn. - comprises optionally modified amylopectin type potato starch." & SE 9 502 629 A (SVERIGES STAERKELSEPRODUCENTER), 18 January 1997 (1997-01-18)

## Description

The present invention relates to the use of a stabilized waxy potato starch to increase the viscosity of a composition, particularly a food product. Starch is the primary form of carbon reserve in plants, constituting 50% or more of the dry weight in many storage organs, i.e., tubers, seeds of cereals. It consists of two major components: amylose, an essentially linear polymer of (1→4) ∝-D-glucopyranose units; and amylopectin, a branched polymer of shorter chains of (1→4) ∝-D-glucopyranose units with (1→6) ∝ branches.

Starch in various forms is of great importance in the food and paper industry. Many different starch products are known which originate from, *inter alia*, maize, tapioca, rice, and potato. In many cases, however, it is necessary to modify the native starches, via chemical, biochemical, and/or physical means, in order to produce the distinct properties necessary to suit particular applications.

Maize starch which is substantially pure amylopectin is also known as waxy maize starch. As used herein, waxy potato starch refers to a potato starch which is high in amylopectin. Waxy-type starches are useful for food applications in that their functionality differs from starches higher in amylose. When starch is heated in an aqueous medium, the granule swells. During this swelling, amylose tends to solubilize and leach out into the surrounding water where it reassociates through hydrogen bonding to initiate gelation, forming a paste that becomes cloudy and opaque as it cools. Over a period of time, the starch network continues to shrink, resulting in a stronger gel which can also result in the release of water. The configuration of amylopectin discourages reassociation so that gelling does not readily occur and the resulting pastes are more flowable and clear.

US-A-3 751 410 teaches starch derivatives that have been both crosslinked and stabilized. FR-A-2,285,401 describes a hydroxypropylated epichtoro-hydrine crosslinked waxy corn starch derivative, which has a degree of substitution by hydroxypropyl units of 0.1 to 2.3 and an alkali fluidity in the range of 30 to 75 ml for a 3 g starch sample in 10 ml H₂O and 90 ml 0.375 N NaOH.

Several processes have been developed to produce a starch high in either amylose or amylopectin, including physical means of separation, classical plant breeding, and genetically engineered modification of the plants such that primarily one type of starch is produced. For example, WO 92/11376 and CA 2,061,443 disclose genetically engineered modification of potato starch to suppress the formation of amylose, producing a potato with a starch content containing essentially pure amylopectin.

Starch functionality can be chemically modified as well. For example, the swelling and subsequent rupture of starch granules during cooking can be controlled by introduction of difunctional agents capable of reacting with the hydroxyl groups of two different molecules within the granule. This is called cross-linking or inhibition. The synthetic bonds reinforce the natural hydrogen bonding, retarding the rate of granule swell and reducing the sensitivity of the swollen granule to rupture. This results in cooked pastes which are more viscous and heavy bodied and are less likely to breakdown with extended cooking times, increased acid or severe agitation.

Waxy starch pastes show little tendency to gel or retrograde when stored under normal conditions at ambient temperatures. However, when stored under refrigerated or freezing conditions, a waxy paste tends to become cloudy and chunky and will release water similar to pastes made with amylose-containing starches. Stabilization reduces the tendency of waxy starches to lose their hydrating ability and clarity upon storage at low temperatures.

Various starches are known to be useful as thickeners in the food industry. However, it is generally preferable to limit the use of starch for several reasons. Firstly, starch adds flavor to foodstuffs. In many foodstuffs, this starchy or cereal flavor is undesirable and difficult to mask.

Secondly, high levels of starch add cohesiveness to foodstuffs. Such texture is undesirable in many foodstuffs where the consumer prefers a shorter texture, such as one that is creamy and/or smooth.

Thirdly, starch adds opacity to foodstuffs. In many foodstuffs, it is desirable to have more clarity; not only to produce clearer foodstuffs, but also to provide truer colors.

Fourthly, starch adds calories to foodstuffs. Currently, a significant segment of the consumer market is watching their weight. Therefore, lower calorie foodstuffs are often desirable. By adding less starch, which contributes approximately 4Kcal/g, and replacing the unnecessary starch with lower or no calorie bulking materials, the calorie content of a foodstuff can be decreased.

Fifthly, functional starch may be costly. Many starches which add specific functionality to foodstuffs are expensive due to the modifications which provide the functionality. Using less starch could therefore reduce the cost of producing the foodstuff.

Surprisingly, it has now been discovered that certain stabilized waxy potato starches, have unexpectedly high viscosities such that they can provide the desired viscosity to a composition while using substantially less than would be need if using a conventional starch thickener or viscosifier.

The present invention is directed to an unexpectedly high viscosity modified waxy potato starch obtained by controlling the type and degree of stabilization. Such starch is useful as a thickener or viscosifier. By using such starches, the same magnitude of viscosity may be obtained using less starch than if other starches were used, including stabilized starches originating from other grains including potato, corn, waxy corn, rice and waxy rice. These starches have the added benefits of good clarity and short, smooth texture.

An object of the present invention is to provide a stabilized waxy potato starch.

Another object of the present invention is to provide such a starch with a high viscosity, good clarity, and a short, smooth texture.

A further object of the present invention is to provide a composition, particularly a foodstuff, which uses less starch to obtain its desired viscosity.

These and other objects of the present invention will become apparent to one skilled in the art from the following detailed description and examples below.

The present invention is directed to a hydroxypropylated starch obtainable by adding 1 to 25% of a propylene oxide to waxy potato starch and to an edible composition comprising this modified starch.

As stated above, present invention is directed to an unexpectedly high viscosity waxy potato starch obtained by controlling the type and degree of stabilization. Such starch is useful as a thickener or viscosifier. By using such starch, the same magnitude of viscosity may be obtained using less starch than if other starches were used as the base material, including potato, corn, waxy corn, rice or waxy rice. The stabilized waxy potato starches have the added benefits of good clarity and short, smooth texture.

The present starches are prepared by stabilizing a waxy potato starch. To stabilize the waxy potato starch, an aqueous starch slurry containing from 10 to 40% solids is prepared. From 20 to 30% percent sodium sulfate based on the weight of the starch is added. The pH is then adjusted to 11 to 13 by addition of a 3% sodium hydroxide solution in an amount of from 40 to 60% based upon the weight of the starch. The stabilizing agent propylene oxide is added in an amount of 1% to 25%, particularly from 3 to 20%, most particularly from 5 to 15%, by weight of the starch.

The temperature is brought to below 50°C and the process is allowed to continue for 18 to 24 hours.

The resultant modified waxy potato starch has an unexpectedly high peak viscosity, at least three times, particularly at least five times, more particularly at least ten times, even more particularly at least fifteen times, that of the modified starch prepared from common (non-waxy) potato starch.

The resultant hydroxypropylated waxy potato starch may be used as a thickener or viscosifier; that is to increase the viscosity of a fluid or semisolid composition. The composition may be a slurry or a solution and may be of any pH. In particular, foodstuffs may be thickened by the present starch. Foodstuffs is intended to include any edible product, including, but not limited to: dressings, including pourable dressings and spoonable dressings; pie fillings, including fruit and cream fillings; sauces, including white sauces and dairy-based sauces such as cheese sauces; gravies; lite syrups; puddings; custards; yogurts; sour creams; beverages, including dairy-based beverages; glazes; and soups. Further, foodstuffs is intended to include those which undergo various processing and storage conditions including, but not limited to, retorting, aseptically filled packaging, refrigeration, and freezing.

The present starch may be added in any amount necessary to obtain the desired viscosity of the composition. In general, the starch may be added in an amount of from 0.01% to 50% of the composition by weight. For a foodstuff, the starch may be added in an amount of from 0.01 to 10%, particularly from 0.1 to 5% by weight of the foodstuff. The level of modified potato starch will depend upon the composition to which it is added and the desired end viscosity.

Due to the high viscosity of the present hydroxypropylated starch, it can be added in an amount equal to from 0.05 to 0.85 of a conventionally used starch to result in the same viscosity. When the composition is a foodstuff, the present starch may be added in an amount equal to from 0.05 to 0.90, particularly from 0.20 to 0.90, more particularly from 0.50 to 0.90, of a conventionally used starch to result in the same viscosity. Thus, less of the present starch can be used to obtain the desired viscosity of the composition.

A method of increasing the viscosity of a composition comprising adding the starch according to the invention in an amount of from 5 to 90% of a conventionally used starch is also part of the invention.

The present starch also has the advantage of having good clarity and contributing a short, smooth texture and a heavy body to the composition. Such characteristics are important in many foodstuffs as they are central to consumer acceptance. Optical clarity is especially important in clear foodstuffs such as broths, syrups, and fruit fillings. It is further important in that opacity changes the color of

foodstuffs, for example yielding pinkish tomato products instead of the desired red color. A short smooth texture is important in that consumers do not like certain foodstuffs to have a gelled or cohesive texture. This is especially important in creamy products such as dairy products and in liquid products such as broths, soups, and syrups.

Further, the present starch may exhibit excellent stability when subjected to various processing and storage conditions, including high temperature, low temperature, and high shear. Thus, the present starch may be particularly useful in foodstuffs which are retorted, aseptically filled, or frozen.

The present stabilized starch is especially useful in foodstuffs in which fill viscosity is needed for the retorting process; in low moisture foodstuffs such as processed meat products; and in foodstuffs receiving minimum heating or shear during processing such as instant soups and instant beverages.

### EXAMPLES

The following examples are presented to further illustrate and explain the present invention and should not be taken as limiting in any regard.

The examples concern sometimes hydroxypropylated, crosslinked waxy potato starch. This is, however, only done for illustrative purposes. Hydroxypropylated, crosslinked waxy potato starches do not form subject-matter claimed herein, being instead claimed subject-matter in the main EP-application 97 104 803.8.

### Example 1 - Preparation of a Hydroxypropylated Waxy Potato Starch

A starch slurry was prepared which contained 1000g waxy potato starch and 1500g water. To this slurry was added 250g sodium sulfate. The pH was then adjusted to 11-12 by addition of 500g of a 3% sodium hydroxide solution

Next, 85.2g propylene oxide was added to stabilize the starch and the reaction was allowed to proceed for 18 hours at a temperature of 40 to 45°C. The slurry was then cooled to 30°C.

The slurry was then neutralized to a pH of 5-7 using a 3% solution of hydrochloric acid, washed with distilled water, and dried using conventional means known in the art. The resultant starch was a hydroxypropylated, waxy potato starch.

### Example 2 - Hot Paste Viscosity Measurement

A slurry containing 5.5% starch on a dry weight basis was prepared and heated from 50°C to 90°C at a rate of 1.5°C per minute. The slurry was then held at 90°C for seventeen (17) minutes. Hot viscosity was measured while heating the paste in an RVA Series 4 Rapid Visco Analyzer (Newport Scientific, New South Wales, Australia).

Modified dent corn, waxy corn, and potato starches were prepared using the procedure of example 1 except the various base starches were substituted for the waxy potato starch. Further, example 1 was repeated using half the amount (4%) of propylene oxide to modify each of the four base starches (dent corn, waxy corn, potato, and waxy potato). The hot viscosity of the base starches and the hydroxypropylated starches were measured and the results are shown in Table I, below.

**TABLE I**

| Peak Hot Viscosity Measurements mPas (cps) | | | |
|---|---|---|---|
| BASE STARCH ↓ | 0% PO | 4% PO | 8%PO |
| DENT CORN | 370 | 540 | 470 |
| WAXY CORN | 1350 | 1300 | 1450 |
| POTATO | 3700 | 3300 | 3500 |
| WAXY POTATO | 3500 | 4000 | 4600 |

As can be seen from the above Table I, above, controlling the degree of stabilization of waxy potato starch yields an unexpected increase in viscosity. Eight percent hydroxypropylation results in a viscosity increase of 1100 mPas (cps) over non-hydroxypropylated waxy potato starch. In comparison, an eight percent hydroxypropylation of dent corn, waxy corn, and potato results in a viscosity increase of only 100, 100, and -200 mPas (cps), respectively, over the non-hydroxypropylated base starches.

### Example 3 - Preparation of a Hydroxypropylated Waxy Potato Distarch Phosphate

A starch slurry was prepared which contained 1000g waxy potato starch and 1500g water. To this slurry was added 250g sodium sulfate. The pH was then adjusted to 11-12 by addition of 500g of a 3% sodium hydroxide solution.

Next, 81g propylene oxide was added to stabilize the starch and the reaction was allowed to proceed for 18 hours at a temperature of 40 to 45°C. The slurry was then cooled to 30°C.

Next, 0.17g phosphorous oxychloride was added to cross-link the starch. The reaction was allowed to proceed for 30 minutes. The pH was then adjusted to 3.0 with sulfuric acid and held for one hour.

The slurry was then neutralized to a pH of 5-7 using a 3% solution of sodium hydroxide, washed with distilled water, and dried using conventional means known in the art. The resultant starch was a hydroxypropylated, waxy potato distarch phosphate.

### Example 4 - Viscosity Measurements

### A. Hot Paste Viscosity Measurement

A slurry containing 5.5% starch on a dry weight basis was prepared and heated from 50°C to 90°C at a rate of 1.5°C per minute. The slurry was then held at 90°C for seventeen (17) minutes. Hot viscosity was measured while heating the paste in an RVA Series 4 Rapid Visco Analyzer (Newport Scientific, New South Wales, Australia).

Modified dent corn, waxy corn, and potato starches were prepared using the procedure of example 3 except the various starches were substituted for the waxy potato starch. The hot viscosity of these hydroxypropylated distarch phosphates, as well as the hydroxypropylated waxy potato distarch phosphate prepared in example 3, were measured and the results are shown in Graph 1, below.

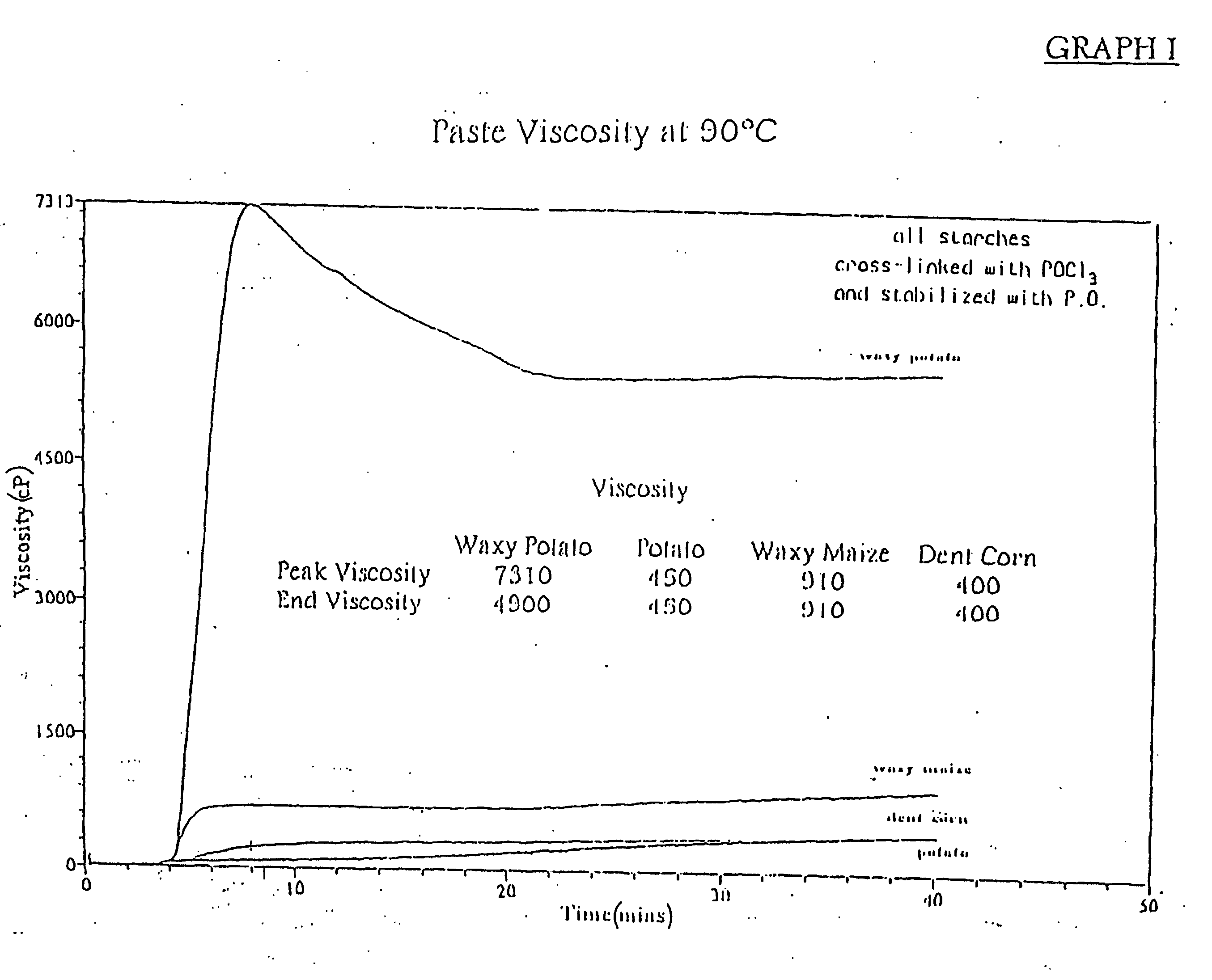

As can be seen from Graph 1, controlling the degree of stabilization and the level of crosslinking of waxy potato starch yields an unexpected increase in viscosity. The modified waxy potato starch has a peak viscosity approximately sixteen times that of modified potato starch. In contrast, the modified waxy corn starch has a peak viscosity only twice that of modified dent corn starch.

### B Cold Paste Viscosity Measurement

The cooked paste from the hot paste viscosity measurement of Example 4A was cooled to 30°C and held overnight at 4°C. Using an RFS2-BD050 rheometer (Rheometrics, Piscataway, NJ), viscosity was measured during a shear sweep from 0 1 to 100 sec⁻¹ at 25°C. Parallel plates of 25mm in diameter were used at a distance of 1.257mm apart. Viscosity was compared at a shear of 10 sec⁻¹.

The cold viscosity of the four hydroxypropylated distarch phosphates of example 4A were measured and the results are shown in Graph 2, below.

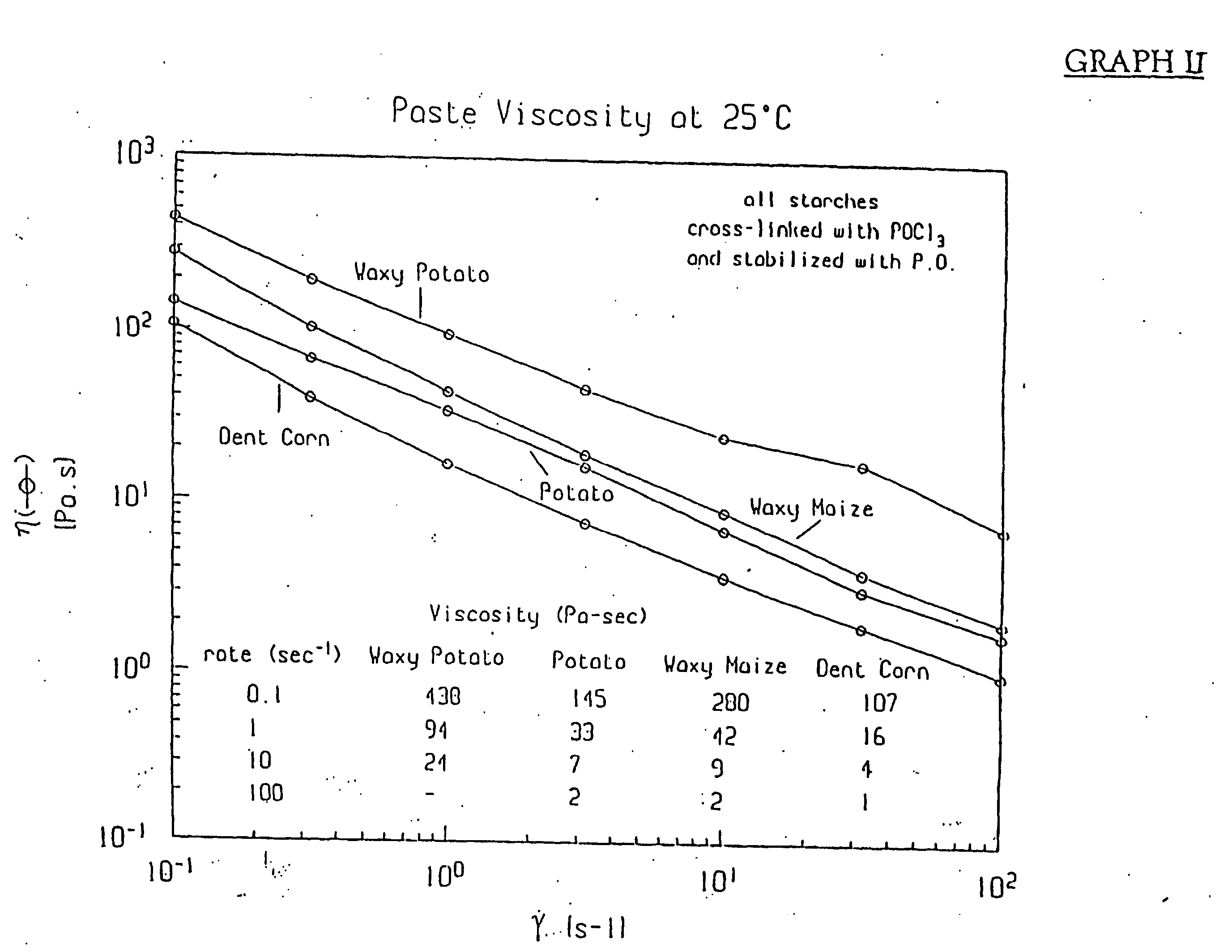

As can be seen from Graph 2, controlling the degree of stabilization and the level of crosslinking of waxy potato starch at a rate of 10 sec⁻¹ which approximates average human mastication, yields an unexpected increase in viscosity. The modified waxy potato starch has a peak viscosity approximately 3.5 times that of modified potato starch. In contrast, the modified waxy corn starch has a peak viscosity only twice that of modified dent corn starch.

### Example 5 - Viscosity of Various Modified Starches

The viscosity of various modified starches were measured using the procedure of Example 4a (neutral) and the procedure of Example 4a wherein the starch was slurried in citric acid buffer at a pH of approximately 3.0 (acid). The results are shown in Tables II and III below.
a. The procedure of Example 3 was used to modify corn, waxy corn, rice, waxy rice, potato and waxy potato.

**TABLE II**

| Sample Base | Gelatinization Time, min. | | Peak Viscosity, mPas (cP) | | End Viscosity, mPas (cP) | |
|---|---|---|---|---|---|---|
| | Acid | Neutral | Acid | Neutral | Acid | Neutral |
| Corn | 2.0 | 2.0 | 630 | 400 | 630 | 400 |
| Waxy Corn | 2.0 | 2.0 | 690 | 910 | 690 | 910 |
| Rice | 1.5 | 1.0 | 260 | 175 | 230 | 175 |
| Waxy Rice | 1.5 | 1.0 | 320 | 390 | 310 | 390 |
| Potato | 5.0 | 4.0 | 500 | 450 | 500 | 450 |
| Waxy Potato | 2.3 | 4.0 | 3810 | 7310 | 3800 | 4900 |

As can be seen from Table II, the viscosity of the modified waxy potato starch was significantly higher than any of the other starches. Further, the difference between the viscosity of the waxy potato and that of the potato is significantly greater than that of any other common (non-waxy) and waxy variety.
b. The procedure of Example 1 was used to modify corn, waxy corn, rice, waxy rice, potato and waxy potato.

**TABLE III**

| Sample Base | Gelatinization Time, min. | | Peak Viscosity, mPas (cP) | | End Viscosity, mPas (cP) | |
|---|---|---|---|---|---|---|
| | Acid | Neutral | Acid | Neutral | Acid | Neutral |
| Corn | 4.3 | 16.0 | 460 | 300 | 460 | 300 |
| Waxy Corn | 2.5 | 6.0 | 670 | 1240 | 670 | 1240 |
| Rice | 2.0 | 9.0 | 300 | 350 | 300 | 350 |
| Waxy Rice | 2.0 | 4.5 | 650 | 950 | 650 | 950 |
| Potato | 1.8 | 4.5 | 1830 | 6150 | 1830 | 6150 |
| Waxy Potato | 2.3 | 7.0 | 1250 | 5800 | 1250 | 5900 |

### Example 6 - Preparation of a Hydroxypropylated Waxy Potato Distarch Phosphate

The method of preparation used in example 3 was followed except that 0.3g phosphorous oxychloride was added to cross-link the starch instead of 0.2g to produce a hydroxypropylated, waxy potato distarch phosphate with a higher degree of crosslinking.

### Example 7 - Frozen Cheese Sauce

This example illustrates that use of waxy potato starch in a frozen cheese sauce. The following formulation and procedure were employed:

| Frozen Cheese Sauce Formulation | |
|---|---|
| Ingredients | Percent (% by wt.) |
| Cheese Powder | 6.76 |
| Sweet Whey | 2.94 |
| Salt | 0.6 |
| Lactic Acid (22%) | 0.12 |
| Nonfat Dry Milk | 1.2 |
| Shortening Powder | 3.2 |
| Starch of Example 3 | 2.5 |
| Water | 82.68 |

All the ingredients were mixed together using conventional mixing equipment known in the art. The mixture was heated to 90°C and held for ten (10) minutes. The mixture was then cooled to 4°C, packaged, and frozen.

The resultant cheese sauce, in the unfrozen state, has a viscosity comparable to that made with 4.5% of a hydroxypropylated waxy corn distarch phosphate.

### Example 8 -Yogurt

This example illustrates that use of waxy potato starch in a yogurt. The following formulation and procedure were employed:

| Yogurt Formulation | |
|---|---|
| Ingredients | Percent (% by wt.) |
| Whole Milk | 91.25 |
| Non-Fat Milk Solids | 5.0 |
| Starch of Example 3 | 0.50 |
| Sugar | 3.0 |
| Yogurt Culture | 0.25 |

Milk, non-fat milk solids, and sugar were blended and heated to 81°C. The mixture was held at this temperature for ten minutes and then homogenized at 50 bar. The mixture was then cooled to 40°C and the culture was added. The cultured mixture was held until pH reaches about 4.3 and then cooled to 4°C.

The resultant yogurt has a viscosity and stability comparable to that made with 1% of a hydroxypropylated waxy corn distarch phosphate.

### Example 9 - Dressing

This example illustrates that use of waxy potato starch in a dressing. The following formulation and procedure were employed:

| Dressing Formulation | |
|---|---|
| Ingredients | Percent (% by wt.) |
| Soy Oil | 30.0 |
| White Vinegar (100 grain) | 10.0 |
| Salt | 1.7 |
| Sugar | 10.0 |
| Spices | 0.5 |
| Potassium Sorbate | 0.1 |
| Starch of Example 3 | 2.5 |
| Water | 41.2 |
| Yolk | 4.0 |

Blend the vinegar, salt, sugar, spices, potassium sorbate, starch, and water. Heat to 90°C and hold for five minutes. Cool to 40°C. While mixing in a colloid mill, slowly add yolks, then oil.

The resultant dressing has a viscosity comparable to that made with 4% of a hydroxypropylated waxy corn distarch phosphate.

### Example 10 - White Sauce

This example illustrates that use of waxy potato starch in a white sauce. The following formulation and procedure were employed:

| White Sauce Formulation | |
|---|---|
| Ingredients | Percent (% by wt.) |
| Light Cream | 20.0 |
| Salt | 0.5 |
| Nonfat Dry Milk | 7.0 |
| Starch of Example 3 | 3.0 |
| Water | 69.5 |

Blend together cream, salt, milk and half the water. Heat to 90°C. In a separate container, mix together the starch and the remaining water to form a starch slurry. Add to cream mixture. Hold mixture at 90°C for ten minutes. Cool to 4°C overnight..

The resultant white sauce has a viscosity of about 300 mPas (cP) as measured using a Brookfield viscometer with spindle #21 cup and bob apparatus at 1 rpm and 50°C which was comparable to that made with 3.5% of a hydroxypropylated waxy corn distarch phosphate.

### Example 11 - Pudding

This example illustrates that use of waxy potato starch in a pudding. The following formulation and procedure were employed:

| Pudding Formulation | |
|---|---|
| Ingredients | Percent (% by wt.) |
| Salt | 0.1 |
| Sugar | 3.0 |
| Nonfat Dry Milk | 7.2 |
| Powdered Cream | 4.56 |
| Starch of Example 3 | 4.0 |
| Water | 81.14 |

Blend together all ingredients. Heat to 90°C and hold 10 minutes. Cool to 50°C.

The resultant pudding has a viscosity of above 28,000 mPas (cp) as measured using a Brookfield viscometer with spindle #21 cup and bob apparatus at 1 rpm and 4°C which was comparable to that made with 4.55% of a hydroxypropylated waxy corn distarch phosphate.

### Example 12 - Fruit Pie Filling

This example illustrates that use of waxy potato starch in a fruit pie filling. The following formulation and procedure were employed:

| Fruit Pie Filling Formulation | |
|---|---|
| Ingredients | Percent (% by wt.) |
| Sugar | 17.7 |
| Lemon Juice | 1.0 |
| Salt | 0.2 |
| Spray Dried Cherries, powder | 7.49 |
| Starch of Example 3 | 3.0 |
| Water | 70.61 |

Blend together all ingredients. Heat to 90°C and hold for five minutes. Cool to 40°C.

The resultant fruit pie filling has a viscosity of about 5140 mPas (cP) as measured using a Brookfield viscometer with spindle #21 cup and bob apparatus at 1 rpm and 50°C which was comparable to that made with 3.65% of a hydroxypropylated waxy corn distarch phosphate.

### Example 13 - Chicken Noodle Soup

This example illustrates that use of waxy potato starch in a chicken noodle-soup. The following formulation and procedure were employed:

| Chicken Noodle Soup Formulation | |
|---|---|
| Ingredients | Percent (% by wt.) |
| Chicken broth | 99.56 |
| Starch of Example 1 | 0.44 |

Slurry together all the ingredients. While stirring, heat to 90°C. Fill into cans and retort using conventional methods known in the art.

The resultant chicken noodle soup has a fill viscosity of about 230 mPas (cP) as measured using a Brookfield viscometer with spindle #21 cup and bob apparatus at 1 rpm and 50°C which was comparable to that made with 1.0% of a hydroxypropylated waxy corn starch.

### Example 14 - Lite Pancake Syrup

This example illustrates that use of waxy potato starch in a lite pancake syrup. The following formulation and procedure were employed:

| Lite Pancake Syrup Formulation | |
|---|---|
| Ingredients | Percent (% by wt.) |
| Water | 62.3 |
| Maltodextrin (DE=15) | 33.4 |
| Starch of Example 3 | 1.0 |
| Maple Syrup | 3.0 |
| Citric Acid | 0.09 |
| Sodium Benzoate | 0.05 |
| Potassium Sorbate | 0.05 |
| Aspartame | 0.06 |
| Carmel Color | 0.05 |

Mix together the water and starch. Heat to 90°C and cook ten (10) minutes. Add the carmel color, then the remaining ingredients and mix well.

The resultant lite pancake syrup has a viscosity of about 230 mPas (cP) as measured using a Brookfield viscometer with spindle #21 cup and bob apparatus at 1 rpm and 25°C which was comparable to that made with 1.5% of a hydroxypropylated waxy corn distarch phosphate. Further, the resultant lite syrup was less opaque.

### Example 15 - Chocolate Milkshake Drink

This example illustrates that use of waxy potato starch in a chocolate milkshake drink. The following formulation and procedure were employed:

| Chocolate Milkshake Drink Formulation 77.5 | |
|---|---|
| Ingredients | Percent (% by weight) |
| Water | 77.5 |
| Non-fat Dry Milk | 12 |
| Sugar | 8 |
| Cocoa Powder | 2 |
| Starch of Example 3 | 0.5 |

Mix together all ingredients except the water. Disperse dry mix in water. Pasteurize at 80°C for 30 seconds. Cool to 4°C overnight.

The resultant chocolate milkshake drink has a viscosity of about 450 mPas (cP) as measured using a Brookfield viscometer with spindle #21 cup and bob aparatus at 1 rpm and 4°C which was comparable to that made with 1% of a hydroxypropylated waxy corn distarch phosphate. The mouthfeel of the two milkshake drinks were also comparable.

### Example 16 - Retorted Cheese Sauce

This example illustrates that use of waxy potato starch in a retorted cheese sauce. The following formulation and procedure were employed:

| Retorted Cheese Sauce Formulation | |
|---|---|
| Ingredients | Percent (% by wt.) |
| Grated Cheddar Cheese | 19.9 |
| Margarine | 8.4 |
| Starch of Example 5 | 3.0 |
| Water | 31.3 |
| Milk | 37.4 |

The cheese and margarine were melted together, mixing well. The starch was slurried in the water and then stirred into the cheese mixture. This mixture was heated to 85°C and cooked for three (3) minutes. The milk was stirred into the heated mixture and the temperature was brought back to 85°C. The mixture was cooked at 85°C for an additional three minutes. The cooked cheese sauce was then filled into cans, sealed, and retorted using conventional methods and conditions known in the art.

The resultant cheese sauce has a viscosity comparable to that made with 5% of a hydroxypropylated waxy corn distarch phosphate.. Further, the resultant cheese sauce formulation has improved heat penetration during retorting.

## Claims

1. A hydoxypropylated starch obtainable by adding 1 to 25% of a propylene oxide to waxy potato starch.

2. A method of increasing the viscosity of a composition comprising adding the starch of claim 1 in an amount of from 5 to 90% of a conventionally used starch.

3. An edible composition comprising the starch of claim 1.

## Patentansprüche

1. Hydroxypropylierte Stärke erhältlich durch Zugabe von 1 bis 25 % eines Propylenoxids zu wachshaltiger Kartoffelstärke.

2. Verfahren zur Erhöhung der Viskosität einer Zusammensetzung, umfassend die Zugabe der Stärke gemäß Anspruch 1 in einer Menge von 5 bis 90 % einer konventionell genutzten Stärke.

3. Essbare Zusammensetzung, umfassend die Stärke gemäß Anspruch 1.

## Revendications

1. Amidon hydroxypropylé pouvant être obtenu en ajoutant 1 à 25 % d'un oxyde de propylène à de l'amidon de pomme de terre cireux.

2. Procédé pour augmenter la viscosité d'une composition, comprenant l'addition de l'amidon de la revendication 1 en une quantité de 5 à 90 % d'un amidon utilisé classiquement.

3. Composition comestible comprenant l'amidon de la revendication 1.
